# EUROPEAN PATENT SPECIFICATION

(11) **EP 4 183 197 B1**
(45) Date of publication and mention of the grant of the patent: **21.10.2026**
(21) Application number: 21852460.1
(22) Date of filing: 05.08.2021
(51) Int. Cl.: H04L 5/00, H04L 1/1867, H04B 7/06, H04L 1/08

(54) **METHOD AND APPARATUS FOR SELECTING A BEAM REFERENCE SIGNAL IN A WIRELESS COMMUNICATION SYSTEM**
VERFAHREN UND VORRICHTUNG ZUR AUSWAHL EINES STRAHLREFERENZSIGNALS IN EINEM DRAHTLOSEN KOMMUNIKATIONSSYSTEM
PROCÉDÉ ET APPAREIL DE SÉLECTION D'UN SIGNAL DE RÉFÉRENCE DE FAISCEAU DANS UN SYSTÈME DE COMMUNICATION SANS FIL

(30) Priority: 05.08.2020 CN 202010779681
(43) Date of publication of application: 24.05.2023
(73) Proprietor: Samsung Electronics Co., Ltd., Suwon-si, Gyeonggi-do 16677 (KR)
(72) Inventor: XIONG, Qi, Beijing 100028 (CN); SUN, Feifei, Beijing 100028 (CN); WANG, Yi, Beijing 100028 (CN)
(74) Representative: Nederlandsch Octrooibureau
(86) International application number: PCT/KR2021/010345
(87) International publication number: WO 2022/031079

(56) References cited:
- EP-A1- 3 790 338
- WO-A1-2019/238117
- WO-A1-2020/122686
- US-A1- 2016 285 660
- US-A1- 2018 092 129
- US-A1- 2018 131 426
- US-A1- 2019 313 391
- US-A1- 2019 364 556
- US-A1- 2019 379 431
- US-A1- 2020 008 245
- US-A1- 2022 022 237

## Description

### Technical Field

The disclosure relates to the field of wireless communication, and more particularly to a user equipment and a method performed by the user equipment.

### Background Art

To meet the demand for wireless data traffic having increased since deployment of 4^{th} generation (4G) communication systems, efforts have been made to develop an improved 5^{th} generation (5G) or pre-5G communication system. Therefore, the 5G or pre-5G communication system is also called a 'Beyond 4G Network' or a 'Post Long Term Evolution (LTE) System'.

The 5G communication system is considered to be implemented in higher frequency (mmWave) bands, e.g., 28GHz or 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid frequency shift keying (FSK) and quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

In the 5G system, various communication schemes are discussed. For example, a grant-free communication scheme for transmitting data without granting an uplink transmission is proposed. Furthermore, various discussions for supporting the grant-free communication efficiently are underway. US 2018/092129 A1 discloses UE comprising the transceiver further configured to transmit, to the BS, the RACH preamble over a first beam associated with the first beam ID and receive, from the BS, an RACH response corresponding to the RACH preamble over a second beam, wherein the first beam is different than the second beam.

### Disclosure of Invention

### Technical Problem

The disclosure relates to method and apparatus for selecting a beam reference signal in a wireless communication system.

### Solution to Problem

Aspects of the disclosure are to address at least the above-mentioned problems and/or disadvantages, and to provide at least the advantages described below. Therefore, various aspects of the disclosure provide a user equipment and a method performed by the user equipment. The user equipment and the method performed by the user equipment according to the various aspects of the disclosure, can enable the user equipment (UE) to obtain a finer beam through measurement of a finer beam reference signal configured after receiving a downlink signal transmitted with a wide beam; and to measure and report the finer beam during one stage of the initial access, such as during the procedure of reading system information, scheduling retransmission of message 2, message 4, and even message 3. In addition, it can also receive multiple repetition transmissions of downlink signals to achieve the purpose of coverage enhancement.

A method is provided as defined in the appended claims.

### Advantageous Effects of Invention

The disclosure relates to method and apparatus for selecting a beam reference signal in a wireless communication system.

### Brief Description of Drawings

The above and other objects, features, and advantages of the disclosure will be more apparent from the following description of embodiments of the disclosure with reference to the accompanying drawings in which:
FIG. 1 illustrates an example wireless network 100 according to various embodiments of the disclosure;
FIG. 2a illustrate example wireless transmission path according to an embodiment of the disclosure;
FIG. 2b illustrate example wireless reception path according to an embodiment of the disclosure;
FIG. 3a illustrates an example UE 116 according to an embodiment of the disclosure;
FIG. 3b illustrates an example gNB 102 according to an embodiment of the disclosure;
FIG. 4 illustrates a contention-based random access procedure according to an embodiment of the disclosure;
FIG. 5 illustrates a diagram of an example of a rule by which UE selects a SSB according to an embodiment of the disclosure;
FIG. 6 illustrates a diagram of an example of a finer beam reference signal according to an embodiment of the disclosure;
FIG. 7 illustrates a diagram of an example of a finer beam reference signal based on CSI-RS according to an embodiment of the disclosure;
FIG. 8 illustrates a diagram of an example of a finer beam reference signal based on a repetitive signal DMRS according to an embodiment of the disclosure; and
FIG. 9 is a block diagram illustrating a UE according to an embodiment of the disclosure.

### Best Mode for Carrying out the Invention

The text and drawings are provided as examples only to help readers understand the disclosure. They are not intended and should not be interpreted as limiting the scope of the disclosure in any way. Although certain embodiments and examples have been provided, based on the content disclosed herein, it is obvious to those skilled in the art that modifications to the illustrated embodiments and examples can be made without departing from the scope of the claims.

Those skilled in the art will understand that the singular forms "a", "an", "said" and "the" used herein may include plural forms, unless otherwise specified. It should be further understood that the term "include/comprise" used in the specification of the disclosure refers to the existence of the described features, integers, steps, operations, elements and/or components, but does not exclude the existence or addition of one or more other features, integers, steps, operations, elements, components, and/or groups thereof. It should be understood that when an element is referred to as being "connected" or "coupled" to another element, it may be directly connected or coupled to the other element, or intervening elements may also be present. Furthermore, "connected" or "coupled" as used herein may include wirelessly connected or wirelessly coupled. As used herein, the term "and/or" includes all or any of the units and all combinations of one or more of the associated listed items.

Those skilled in the art will understand that, unless otherwise defined, all terms (including technical and scientific terms) used herein have the same meaning as generally understood by an ordinary person skilled in the art to which the disclosure belongs. It should be further understood that such terms as those defined in a generally used dictionary are to be interpreted to have the same contextual meanings as understood in the relevant field of art, and are not to be interpreted to have ideal or overly formal meanings unless clearly defined in the present specification.

Those skilled in the art will understand that "terminal" and "terminal device" used herein include both wireless signal receiver devices, which only have wireless signal receivers without transmission capability; and devices having receiver and transmitter hardware, which include receiver and transmitter hardware capable of performing bidirectional communication on a bidirectional communication link. Such devices may include: cellular or other communication devices with single-line or multi-line displays, or cellular or other communication devices without multi-line displays; Personal Communications Service (PCS), which may combine voice, data processing, fax and/or data communication capabilities; Personal Digital Assistant (PDA), which may include radio frequency receivers, pagers, internet/intranet access, web browsers, notepads, calendars and/or Global Positioning System (GPS) receiver; conventional laptop and/or palmtop computer or other devices, which are conventional laptops and/or palmtop computers or other devices have and/or include a radio frequency receiver. "Terminal" and "terminal device" used herein may be portable, transportable, installed in transportation means (aircraft, ship, and/or vehicle), or suitable and/or configured for operation locally, and/or operated in a distributed manner on any other location on Earth and/or in space. "Terminal" and "terminal device" used herein may also be communication terminals, Internet terminals, music/video playback terminals, such as PDA, Mobile Internet Device (MID), and/or mobile phones with music/video playback function, and may also be smart TVs, set-top boxes and other devices.

Those skilled in the art can understand that the "base station" (BS) or "network device" used herein may refer to an eNB, an eNodeB, a NodeB, or a base station transceiver (BTS) or a gNB, etc. according to the technology and terminology used.

Those skilled in the art will understand that the "memory" used herein may be of any type suitable for the technical environment herein, and may be implemented using any suitable data storage technology, including but not limited to, semiconductor-based storage devices, magnetic storage devices and systems, optical storage devices and systems, fixed and removable storages.

Those skilled in the art will understand that the "processor" used herein may be of any type suitable for the technical environment herein, including but not limited to, one or more of the following: general purpose computers, special purpose computers, microprocessors, digital signal processors (DSPs), and multi-core-architectures based processors.

The time domain unit (also referred to as a time unit) in the disclosure may be: an OFDM symbol, a set of OFDM symbols (consisted of multiple OFDM symbols), a slot, a set of slots (consisted of multiple slots), a subframe, a set of subframes (consisted of multiple subframes), a system frame, a set of system frames (consisted of multiple system frames); it may also be an absolute time unit, such as 1 millisecond, 1 second, and the like. The time unit may also be a combination of multiple granularities, such as N1 slots plus N2 OFDM symbols.

The frequency domain unit in the disclosure may be: a subcarrier, a subcarrier group (consisted of multiple subcarriers), a resource block (RB), which may also be referred to as physical resource block (PRB), a resource block group (consisted of multiple RBs), a bandwidth part (BWP), a bandwidth part group (consisted of multiple BWPs), a band/carrier, and a band group/carrier group; it may also be absolute frequency domain units, such as 1 Hz, 1 kHz, and the like. The frequency domain unit may also be a combination of multiple granularities, such as M1 PRBs plus M2 subcarriers.

Hereinafter, embodiments according to the disclosure will be described in detail with reference to the accompanying drawings.

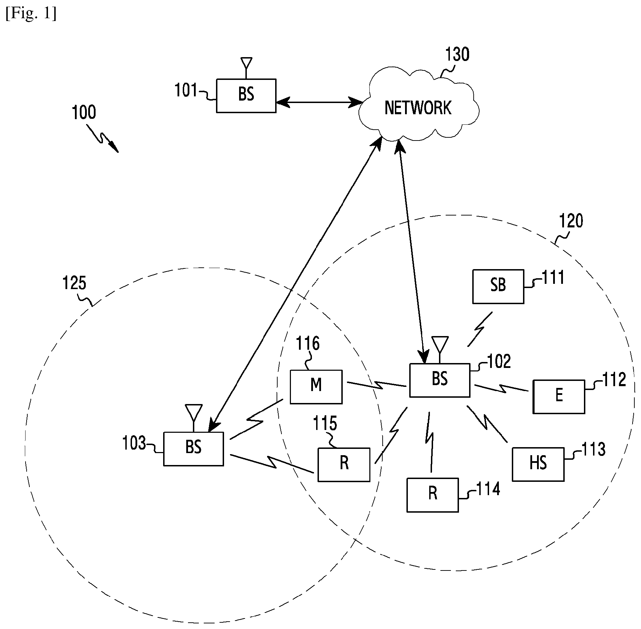

FIG. 1 illustrates an example wireless network 100 according to various embodiments of the disclosure. The embodiment of the wireless network 100 shown in FIG. 1 is for illustration only. Other embodiments of the wireless network 100 can be used without departing from the scope of the disclosure.

The wireless network 100 includes a gNodeB (gNB) 101, a gNB 102, and a gNB 103. gNB 101 communicates with gNB 102 and gNB 103. gNB 101 also communicates with at least one Internet Protocol (IP) network 130, such as the Internet, a private IP network, or other data networks.

Depending on a type of the network, other well-known terms such as "base station" or "access point" can be used instead of "gNodeB" or "gNB". For convenience, the terms "gNodeB" and "gNB" are used in this patent document to refer to network infrastructure components that provide wireless access for remote terminals. And, depending on the type of the network, other well-known terms such as "mobile station", "user station", "remote terminal", "wireless terminal" or "user apparatus" can be used instead of "user equipment" or "UE". For convenience, the terms "user equipment" and "UE" are used in this patent document to refer to remote wireless devices that wirelessly access the gNB, no matter whether the UE is a mobile device (such as a mobile phone or a smart phone) or a device considered generally as being stationary (such as a desktop computer or a vending machine).

gNB 102 provides wireless broadband access to the network 130 for a first plurality of User Equipments (UEs) within a coverage area 120 of gNB 102. The first plurality of UEs include a UE 111, which may be located in a Small Business (SB); a UE 112, which may be located in an enterprise (E); a UE 113, which may be located in a WiFi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some embodiments, one or more of gNBs 101-103 can communicate with each other and with UEs 111-116 using 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and man-made obstacles.

As will be described in more detail below, one or more of gNB 101, gNB 102, and gNB 103 include a 2D antenna array as described in embodiments of the disclosure. In some embodiments, one or more of gNB 101, gNB 102, and gNB 103 support codebook designs and structures for systems with 2D antenna arrays.

Although FIG. 1 illustrates an example of the wireless network 100, various changes can be made to FIG. 1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each of gNBs 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

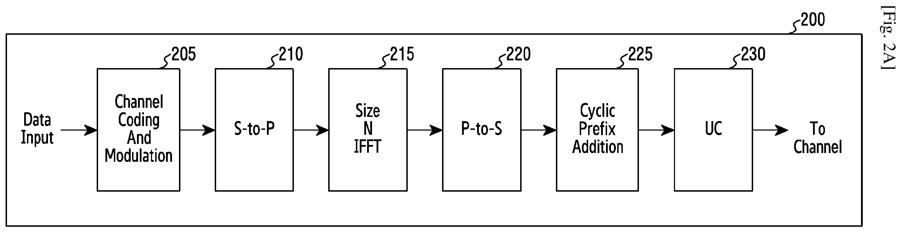

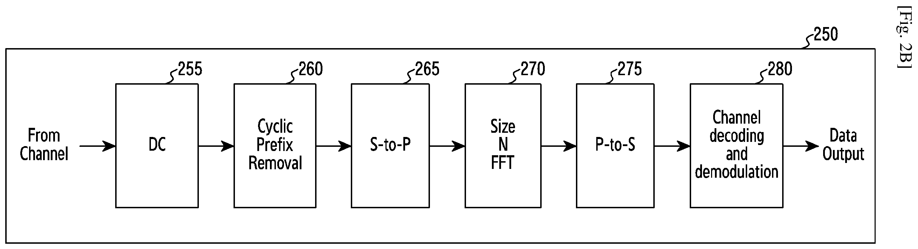

FIGs. 2a and 2b illustrate example wireless transmission and reception paths according to the disclosure. In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some embodiments, the reception path 250 is configured to support codebook designs and structures for systems with 2D antenna arrays as described in embodiments of the disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-to-P) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in gNB 102 and UE 116. The size N IFFT block 215 performs IFFT operations on the N parallel symbol streams to generate a time-domain output signal. The Parallel-to-Serial block 220 converts (such as multiplexes) parallel time-domain output symbols from the Size N IFFT block 215 to generate a serial time-domain signal. The cyclic prefix addition block 225 inserts a cyclic prefix into the time-domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at UE 116 after passing through the wireless channel, and operations in reverse to those at gNB 102 are performed at UE 116. The down-converter 255 down-converts the received signal to a baseband frequency, and the cyclic prefix removal block 260 removes the cyclic prefix to generate a serial time-domain baseband signal. The Serial-to-Parallel block 265 converts the time-domain baseband signal into a parallel time-domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGs. 2a and 2b can be implemented using only hardware, or using a combination of hardware and software/firmware. As a specific example, at least some of the components in FIGs. 2a and 2b may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGs. 2a and 2b illustrate examples of wireless transmission and reception paths, various changes may be made to FIGs. 2a and 2b. For example, various components in FIGs. 2a and 2b can be combined, further subdivided or omitted, and additional components can be added according to specific requirements. Furthermore, FIGs. 2a and 2b are intended to illustrate examples of types of transmission and reception paths that can be used in a wireless network. Any other suitable architecture can be used to support wireless communication in a wireless network.

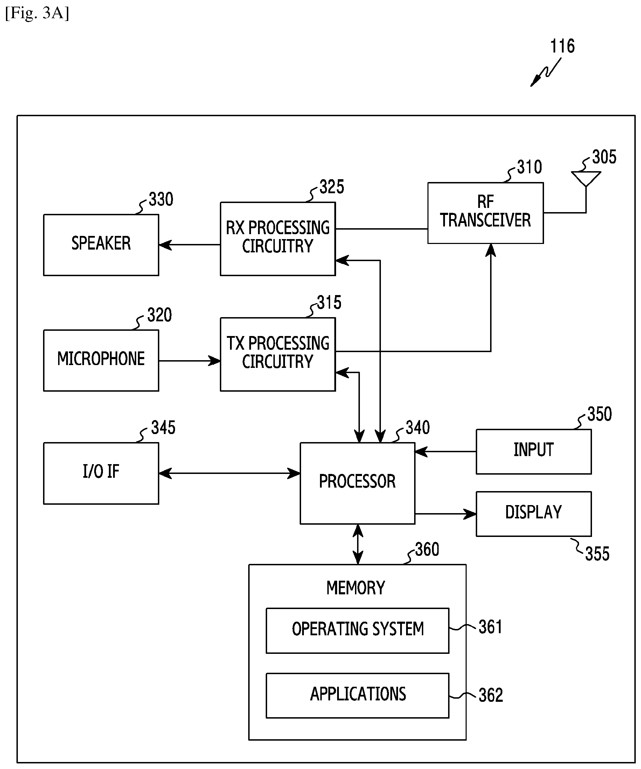

FIG. 3a illustrates an example UE 116 according to the disclosure. The embodiment of UE 116 shown in FIG. 3a is for illustration only, and UEs 111-115 of FIG. 1 can have the same or similar configuration. However, a UE has various configurations, and FIG. 3a does not limit the scope of the disclosure to any specific implementation of the UE.

UE 116 includes an antenna 305, a radio frequency (RF) transceiver 310, a transmission (TX) processing circuit 315, a microphone 320, and a reception (RX) processing circuit 325. UE 116 also includes a speaker 330, a processor/controller 340, an input/output (I/O) interface 345, an input device(s) 350, a display 355, and a memory 360. The memory 360 includes an operating system (OS) 361 and one or more applications 362.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to the speaker 330 (such as for voice data) or to the processor/controller 340 (such as for web browsing data) for further processing.

The TX processing circuit 315 receives analog or digital voice data from the microphone 320 or other outgoing baseband data (such as network data, email or interactive video game data) from the processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of UE 116. For example, the processor/controller 340 can control the reception of forward channel signals and the transmission of backward channel signals through the RF transceiver 310, the RX processing circuit 325 and the TX processing circuit 315 according to well-known principles. In some embodiments, the processor/controller 340 includes at least one microprocessor or microcontroller.

The processor/controller 340 is also capable of executing other processes and programs residing in the memory 360, such as operations for channel quality measurement and reporting for systems with 2D antenna arrays as described in embodiments of the disclosure. The processor/controller 340 can move data into or out of the memory 360 as required by an execution process. In some embodiments, the processor/controller 340 is configured to execute the application 362 based on the OS 361 or in response to signals received from the gNB or the operator. The processor/controller 340 is also coupled to an I/O interface 345, where the I/O interface 345 provides UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of UE 116 can input data into UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although FIG. 3a illustrates an example of UE 116, various changes can be made to FIG. 3a. For example, various components in FIG. 3a can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although FIG. 3a illustrates that the UE 116 is configured as a mobile phone or a smart phone, UEs can be configured to operate as other types of mobile or stationary devices.

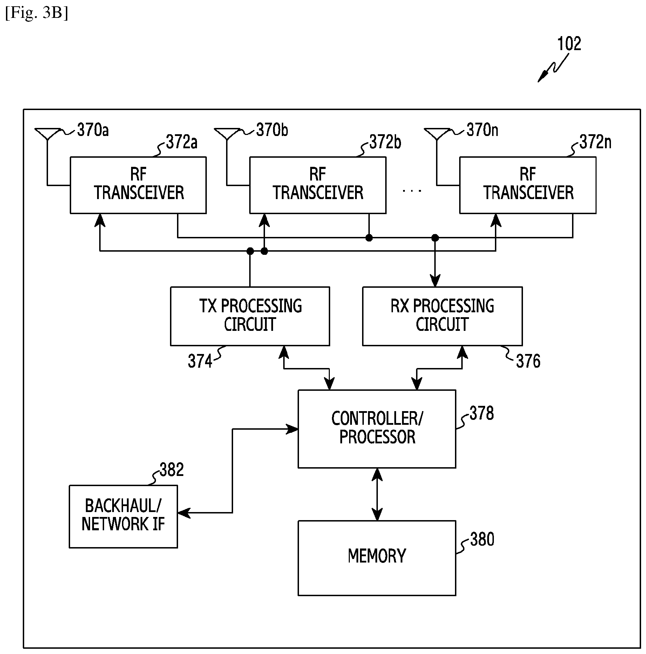

FIG. 3b illustrates an example gNB 102 according to the disclosure. The embodiment of gNB 102 shown in FIG. 3b is for illustration only, and other gNBs of FIG. 1 can have the same or similar configuration. However, a gNB has various configurations, and FIG. 3b does not limit the scope of the disclosure to any specific implementation of a gNB. It should be noted that gNB 101 and gNB 103 can include the same or similar structures as gNB 102.

As shown in FIG. 3b, gNB 102 includes a plurality of antennas 370a-370n, a plurality of RF transceivers 372a-372n, a transmission (TX) processing circuit 374, and a reception (RX) processing circuit 376. In certain embodiments, one or more of the plurality of antennas 370a-370n include a 2D antenna array. gNB 102 also includes a controller/processor 378, a memory 380, and a backhaul or network interface 382.

RF transceivers 372a-372n receive an incoming RF signal from antennas 370a-370n, such as a signal transmitted by UEs or other gNBs. RF transceivers 372a-372n down-convert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. The RX processing circuit 376 transmits the processed baseband signal to the controller/processor 378 for further processing.

The TX processing circuit 374 receives analog or digital data (such as voice data, web data, email or interactive video game data) from the controller/processor 378. The TX processing circuit 374 encodes, multiplexes and/or digitizes outgoing baseband data to generate a processed baseband or IF signal. The RF transceivers 372a-372n receive the outgoing processed baseband or IF signal from the TX processing circuit 374 and up-convert the baseband or IF signal into an RF signal transmitted via antennas 370a-370n.

The controller/processor 378 can include one or more processors or other processing devices that control the overall operation of gNB 102. For example, the controller/processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. The controller/processor 378 may support any of a variety of other functions in gNB 102. In some embodiments, the controller/processor 378 includes at least one microprocessor or microcontroller.

The controller/processor 378 is also capable of executing programs and other processes residing in the memory 380, such as a basic OS. The controller/processor 378 can also support channel quality measurement and reporting for systems with 2D antenna arrays as described in embodiments of the disclosure. In some embodiments, the controller/processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using the RF transceivers 372a-372n, the TX processing circuit 374 and/or the RX processing circuit 376) support aggregated communication with FDD cells and TDD cells.

Although FIG. 3b illustrates an example of gNB 102, various changes may be made to FIG. 3b. For example, gNB 102 can include any number of each component shown in FIG. 3a. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

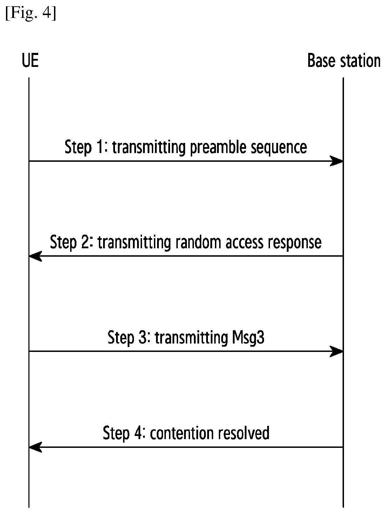

FIG. 4 illustrates a contention-based random access procedure according to an embodiment of the disclosure.

Transmission in a wireless communication system includes: transmission from a base station (gNB) to a user equipment (UE) (referred to as downlink transmission), the slot corresponding to which is called a downlink slot; and transmission from the UE to the base station (referred to as uplink transmission), the slot corresponding to which is called an uplink slot.

In the downlink communication of the wireless communication system, the system periodically transmits synchronization signals and broadcast channels to the UE via a synchronization signal block (SSB/PBCH block), the periodicity of which is a synchronization signal block (SSB) periodicity, or may be called an SSB burst periodicity. At the same time, the base station may configure a physical random access channel (PRACH) configuration period, during which a certain number of random access transmission occasions (also called random access occasions, PRACH transmission occasions, ROs) are configured, which satisfy that all SSBs can be mapped to the corresponding RO within a mapping period (having a certain duration).

In a new radio (NR) communication system, before radio resource control is established, such as during the random access procedure, the performance of random access directly affects the user experience. In conventional wireless communication systems, such as LTE and LTE-Advanced, the random access procedure is applied in multiple scenarios, such as initial connections establishment, cell handover, uplinks re-establishment, and RRC connection re-establishment, etc.; and divided into contention-based random access and contention-free random access depending on whether the UE occupies the preamble sequence resource exclusively or not. Since a preamble sequence is selected from the same preamble sequence resources during the attempt of establishment of an uplink connection by respective users in the contention-based random access, it may be possible for a plurality of UEs to select the same preamble sequence to be transmitted to the base station. Hence, a contention resolution mechanism becomes an important research direction of random access. How to reduce the contention probability and how to rapidly resolve contentions that have already taken place are key indicators that influence the performance of random access.

The contention-based random access procedure in LTE-A consists of four steps, as shown in Figure 4. In the first step, a UE randomly selects a preamble sequence from a preamble sequence resource pool and transmits it to the base station. The base station performs correlation detection on the received signals to identify the preamble sequence transmitted by the UE. In the second step, the base station transmits a random access response (RAR) to the UE, which includes a random access preamble sequence identifier, a timing advance indication determined according to a time delay estimation between the UE and the base station, a temporary Cell-Radio Network Temporary Identifier (C-RNTI), and time-frequency resources allocated to the UE for a next uplink transmission. In the third step, the UE transmits a message 3 (Msg3) to the base station according to information in the RAR. The Msg3 includes information such as a user terminal identifier and RRC connection request etc., wherein the user terminal identifier is unique to the UE and used to resolve contentions. In the fourth step, the base station transmits a contention resolution identifier to the UE, including an identifier of the user terminal which is the winner of the contention resolution. The UE upgrades the temporary C-RNTI to a C-RNTI after detecting the identifier thereof, transmits an acknowledgement (ACK) signal to the base station to complete the random access procedure, and waits for the scheduling of the base station. Otherwise, the UE would start a new random access procedure after a period of time delay.

For a contention-free random access procedure, the base station may allocate a preamble sequence to the UE since it has known the identifier of the UE. Hence, upon transmitting the preamble sequence, the UE does not need to randomly select a sequence and instead, the UE uses an allocated preamble sequence. The base station may transmit a corresponding random access response after detecting the allocated preamble sequence, and the random access response includes information such as timing advance and uplink resource allocation etc. After receiving the random access response, the UE recognizes that uplink synchronization has been completed and waits for further scheduling of the base station. Therefore, the contention-free random access procedure includes only two steps: the first step is to transmit a preamble sequence; and the second step is to transmit a random access response.

The random access procedure in LTE is applicable to the following scenarios:
1. Initial access from RRC_IDLE;
2. RRC connection re-establishment procedure;
3. Cell handover;
4. Downlink data arrival during RRC_CONNECTED requiring random access procedure (when the uplink synchronization status is "non-synchronized");
5. Uplink data arrival during RRC_CONNECTED requiring random access procedure (when the uplink synchronization status is "non-synchronized", or there are no PUCCH resource allocated for the scheduling request); and
6. Positioning.

However, in systems that use beamforming and/or systems with limited coverage, in the initial access stage, the UE may eventually fail to access due to mobility or other reasons, e.g. the UE fails to correctly receive message 2 or message 4 and the like from the base station device in the random access procedure; therefore, how to provide sufficient beamforming gain and/or provide sufficient coverage for the reception of downlink signals during the initial access procedure is a problem that needs to be solved.

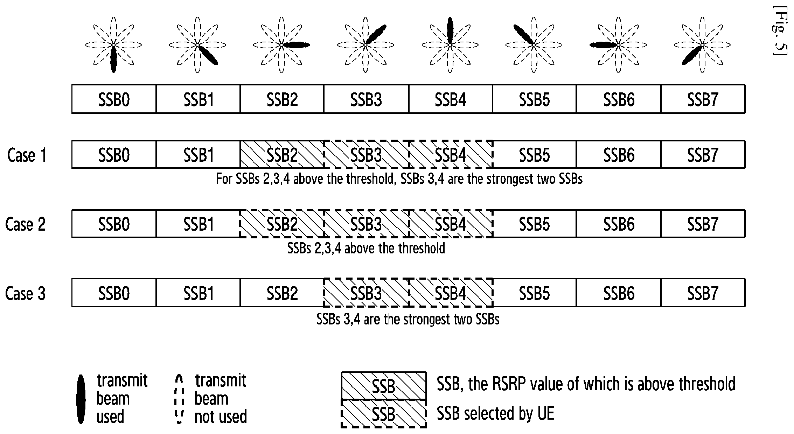

FIG. 5 illustrates a diagram of an example of a rule by which UE selects a SSB according to an embodiment of the disclosure.

In particular, in this embodiment, a novel method for determining the resource configuration of downlink signal transmission is described.

In the initial access procedure, the UE needs to measure the downlink beam reference signal to obtain a reference signal received power (RSRP) for the measured downlink beam reference signal, wherein the downlink beam reference signal includes SSB and the like.

In particular, in the initial access procedure, a wide beam (such as an SSB beam) may be used by the base station to transmit the downlink signal, which has a large coverage angle but a small beamforming gain; and if a narrow beam is directly used by the base station for transmission, then the coverage angle is small, thus in order to fully cover the cell, a large number of SSBs need to be transmitted. Also, when the UE is moving, it is of high probability that the selected transmit beam has been changed, while the there is no chance to notify the base station or the base station is not notified timely, resulting in the initial access (and/or random access procedure) failure. Therefore, in order to provide better coverage and enable the UE to better cope with mobility, a method for determining the resource configuration of downlink signal transmission according to the embodiments of the disclosure is proposed.

In particular, if the number of SSBs transmitted by the base station is N_SSB, that is, each SSB can represent a different direction, then by measuring the SSB that can be received, when measuring and selecting the SSB, the UE can use at least one of the following methods:
(1) Based on a threshold T_RSRP configured or preset by the base station, the UE selects one strongest SSB or X strongest SSBs, the RSRP value of which is or are above (or not below) T_RSRP, among the measured SSBs; wherein X is a number of a positive integer value configured by the base station or preset. As illustrated by case 1 in FIG. 5, SSBs 2, 3, 4 are above the threshold and X is configured as 2, then the UE selects the strongest 2 SSBs from SSBs 2, 3, 4, that is, SSBs 3, 4; preferably, when the number R of SSBs, the RSRP value of which is above (or not below) the threshold, is lower than X, the UE may select the R SSBs (which can ensure that the RSRP values of all selected SSBs are above or not below the threshold) or the strongest X SSBs (including the R SSBs, and (X-R) strongest SSBs the RSRP values of which are not above or below the threshold) (which can ensure that the number of SSBs selected by the UE can reach X); preferably, the number of X may not be fixed, that is, the UE can select all SSBs the RSRP value of which are above or not below the threshold; as illustrated by case 2 in FIG. 5, there are 3 SSBs (SSB 2, 3, 4) the RSRP value of which is above the threshold, then the UE selects all the 3 SSBs (SSB 2, 3, 4);
(2) The UE directly selects one or X SSBs of strongest RSRP among the measured SSBs, wherein X is a number of a positive integer value configured by the base station or preset; preferably, this method will be used only when the RSRP values of all the measured SSBs are not above (or below) T_RSRP; as illustrated by case 3 in FIG. 5, X is configured as 2, and the UE directly selects the strongest 2 SSBs from the measured SSBs, that is SSB3, 4.
(3) In particular, if the number of received or measured SSBs is less than the X configured by the base station or preset for the above cases, the UE selects all the received or measured SSBs.

Based on the selected SSB, the UE can continue operations such as subsequent system information acquisition and random access procedures or the like.

With the method described above with reference to FIG. 5, it can achieve the purpose of coverage enhancement by the following: after receiving the downlink signal transmitted with wide beam, obtaining a finer beam through the measurement of the finer beam reference signal configured, as well as measuring and reporting with the fine beam.

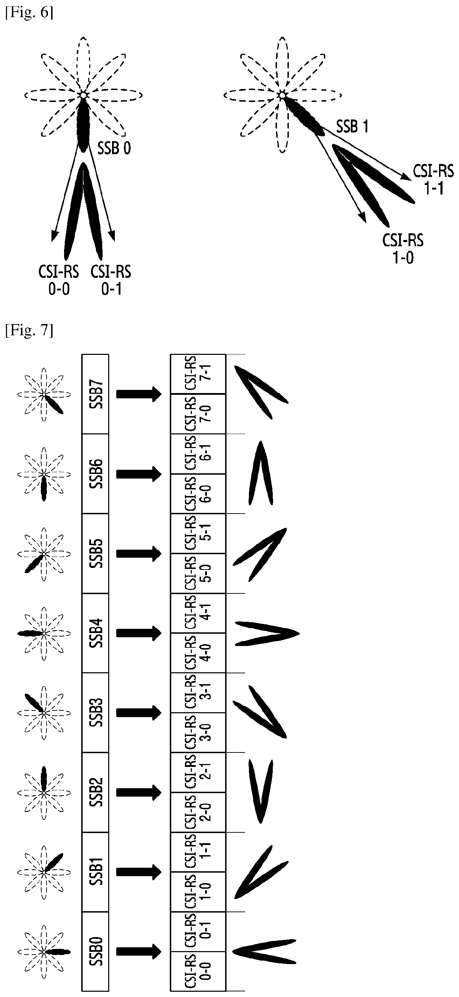

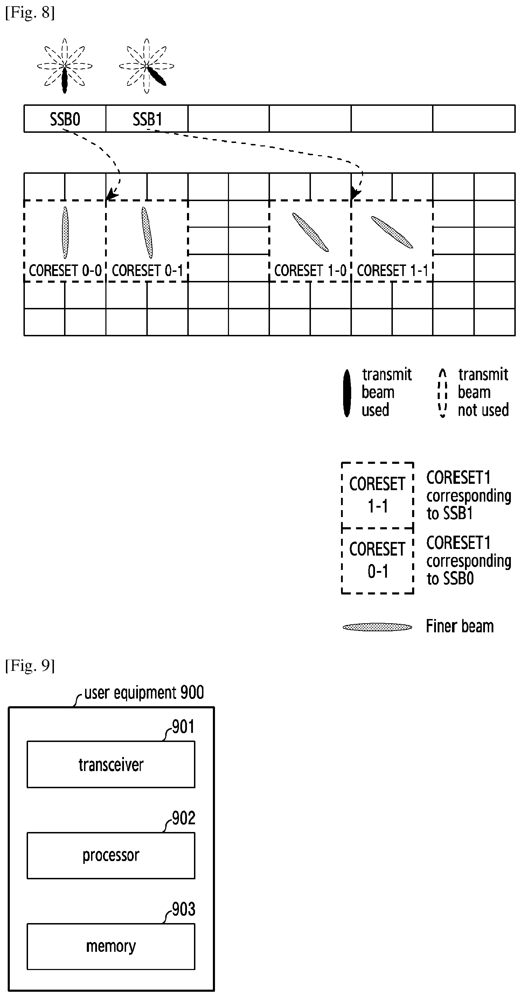

In the disclosure, in order to obtain a better beamforming gain during the initial access procedure, a finer beam reference signal is introduced. FIG. 6 illustrates a diagram of an example of a finer beam reference signal according to an embodiment of the disclosure. FIG. 7 illustrates a diagram of an example of a finer beam reference signal based on CSI-RS according to an embodiment of the disclosure. FIG. 8 illustrates a diagram of an example of a finer beam reference signal based on a repetitive signal DMRS according to an embodiment of the disclosure. The description will be made below with reference to FIGs. 6 to 8.

Based on the following considerations, a finer beam reference signal is introduced:
(1) A finer beam reference signal is a beam reference signal transmitted with a finer beam based on the existing beam reference signal (e.g., the SSB signal), the purpose of which is to obtain a better beamforming gain;
(2) Preferably, if the UE needs to measure more finer beam reference signals, then the time it takes will be longer, which is adverse to the quick access of the initial access; if the finer beam reference signal measurement is not performed, then the better beamforming gain cannot be obtained, which is adverse to the success probability of the initial access; therefore, it is necessary to optimize the configuration of finer beam reference signals to balance the access success rate and access delay;
(3) Wherein the configuration of the finer beam reference signal includes at least one of the following:
   (3-1) The number of finer beam reference signals (mapped) configured for each beam reference signal, for example, the number of CSI-RS configured in one SSB is two; as illustrated in FIG. 6, two CSI-RSs are configured in SSB 0, that is CSI-RS 0-0, 0-1; two CSI-RSs are configured in SSB 1, that is CSI-RS 1-0, 1-1; in the same way, the CSI-RSs configured in the subsequent SSBs can be known, as illustrated in FIG. 7;
   (3-2) The time-frequency resource position of the configured (mapped) finer beam reference signal (that is, the starting position of the time frequency resource, the size of the time-frequency resource occupied); in particular:
      (3-2-1) The time domain unit interval of each CSI-RS from the reference point in the time domain; and/or the frequency domain unit interval of each CSI-RS from the reference point in the frequency domain; the reference point may be an absolute time domain point (SFN 0) or an absolute frequency domain point (for example, point A), and may also be the time domain starting (or end) position and/or frequency domain starting (or end) position of the corresponding SSB; in particular, the reference points of all CSI-RSs can be corresponding to a specific SSB, such as the time domain starting (or end) position and/or frequency domain starting (or end) position of SSB0;
      (3-2-2) The number of time domain units and/or the number of frequency domain units occupied by each CSI-RS is configured by the base station or preset.

For the above-mentioned finer beam reference signal, the configuration information about the finer beam reference signal transmitted by the base station is received; according to the configuration information about the finer beam reference signal, the finer beam reference signal corresponding to the downlink beam reference signal is received and measured; and one or more finer beam reference signals is selected, wherein the method of selecting the finer beam reference signal is similar to the method of selecting the downlink beam reference signal. In particular, for the above-mentioned finer beam reference signal, the following operations may also be performed.
(1) Preferably, the finer beam reference signal may also be the SSB transmitting with a fine beam (for example, SSB0-0, SSB0-1), and/or the DMRS of PBCH transmitting in the SSB, and/or the DMRS in the CORESET (for scheduling system information) (and/or the search space and/or the DCI/PDCCH), and/or the DMRS on the PDSCH (carrying system information);
(2) Preferably, the DMRS signal may be DMRS of a repetition version of corresponding signal; as illustrated in FIG. 8, one SSB will be mapped to two CORESETs, the two CORESETs are transmitted repeatedly, but the transmit beams used by the two CORESETs are finer beams, that is, the DMRS on the two CORESETs can be used as a finer beam reference signal; wherein the function of the CORESET repeatedly transmitted can also be advantageous for the UE to perform combined detection, thereby improving the coverage of the base station;
(3) Preferably, the CORESET repeatedly transmitted may also be PBCH and/or search space, and/or DCI/PDCCH, and/or PDSCH (carrying system information), which are repeatedly transmitted; (PDCCH and/or PDSCH of) message 2 in the random access procedure or (PDCCH and/or PDSCH of) message 4 or RAR for scheduling message 3 or DCI/PDCCH for scheduling message 3;
(4) Preferably, the related configuration of the repetition transmission for the signal repeatedly transmitted includes at least one of the following:
   (4-1) The number of repetition transmissions;
   (4-2) The starting position of the time-frequency resource of and/or the size of the time-frequency resource occupied by the repetition transmission;
   (4-3) The interval between repetition signal transmissions (including time domain interval and/or frequency domain interval), the time domain interval can be an integer number of time domain units (for example, 1 OFDM symbol); the frequency domain interval can be an integer number of frequency domain units (for example, 1 PRB)
   (4-4) The period of repetition signal transmission can be a separate time period configuration, or the same as the period of the corresponding signal; for example, if it is repetition transmission of CORESET, it can be transmitted repeatedly according to the period of CORESET;
   (4-5) Related configuration information of the repetition transmission can be obtained through the broadcast information, and/or DCI for scheduling system information/message 2/message 3/message 4, and/or system information, and/or DCI for scheduling paging messages and/or the PDSCH for paging messages; preferably, the configuration can be obtained by the UE in a combined manner, for example, one or more groups of repetition configurations are configured through system information, and then one specific group of repetition configurations are configured through DCI in message 2, wherein the one group of repetition configurations includes one or more of the foregoing configuration information;
(5) Preferably, the UE can detect multiple signals which are repeatedly transmitted to select the best repetition version, or the UE can perform combined detection on multiple repetitive signals to achieve the purpose of coverage enhancement; preferably, the UE can detect the DMRS in the repetition version through measurement, based on the measured RSRP obtains one or N repetition versions (for example, represented by the index of the repetition version, such as COREST 0-0, 0-1, etc.) having the strongest RSRP, and feeds it back to the base station through the uplink signal; wherein, the uplink signal may be a group of random access resource (including a group of random access preamble and/or a group of random access opportunity) and/or feedback of an uplink data channel (for example, PUSCH in message A in a two-step random access and/or message 3 in a four-step random access) and/or the PUCCH signal after the message 4;
(6) Preferably, selected strongest 1 or N repetition versions of signals are fed back through the group of random access resources, which can also be expressed as feedback of the beams (finer beams) selected by the UE based on the mapping between the finer beam reference signals and random access resources;
(7) Preferably, the feedback is performed through the PUCCH signal after message 4, including j oint coding of the selected finer beam reference index and the feedback ACK signal; or separate coding (so that when the selected finer beam reference index which is fed back is wrongly detected, the ACK signal can be detected correctly separately);
(8) Preferably, the repetition of the PDCCH may include at least one of the following:
   (8-1) Larger size of CORESET, that is, the size of time-frequency resource occupied by the CORESET is larger; which is convenient to provide DCI repetition and/or higher aggregation level (AL);
   (8-2) Larger search space;
   (8-3) Higher aggregation level (AL);
   (8-4) Smaller size of DCI (that is, further simplifying the content of DCI, making the number of bits contained smaller, which is advantageous to reducing the bit rate and obtaining higher coding gain), specifically, for the DCI in the initial access procedure, performing minimize processing, such as the DCI on message 2/B, or the retransmission of message 3 or the DCI on message 4;
(9) Preferably, the downlink signal of the UE in the random access procedure can be quasi co-located (QCL) with the selected finer downlink beam reference signal; for example, the UE can assume that message 2 (DMRS in the PDCCH and/or PDSCH) of the random access is quasi co-located with the previously selected CSI-RS 0-0, that is, the UE assume that the characteristics of downlink beam for transmitting message 2 is same as those of a portion of or all the beams of CSI-RS 0-0; in the same way, the quasi co-location can also be performed by considering that (DMRS in) the PDCCH for scheduling message 3 and/or the message 4 (DMRS in the PDCCH and/or PDSCH) are the selected finer downlink beam references;
(10) Preferably, the selected finer downlink beam reference signal is a finer downlink beam reference signal that is latest fed back by the UE through an uplink signal, or is determined to be correct.

Through the method described above with reference to FIGs. 6 to 8, according to the configured parameters, the purpose of coverage enhancement can be achieved.

FIG. 9 illustrates a block diagram of a user equipment (UE) according to an embodiment of the disclosure.

Referring to FIG. 9, the UE (900) comprises a transceiver (901), a processor (902), and a memory (903). The transceiver (901), the processor (902), and the memory (903) are configured to perform operations of the UE shown in the drawings (for example, FIGs. 1 to 8) or described above.

The above embodiments are merely preferred embodiments of the disclosure, and are not intended to limit the disclosure, any modification, equivalent replacement, or improvement made within the scope of the claims shall be included within the protection scope of the disclosure.

Those skilled in the art may understand that the disclosure includes devices involved to perform one or more of the operations described in this disclosure. These devices may be specially designed and manufactured for the required purpose, or may include known devices in general-purpose computers. These devices have computer programs stored therein that are selectively activated or reconstructed. Such computer programs may be stored in readable medium of a device (e.g., a computer) or stored in any type of medium suitable for storing electronic instructions and are respectively coupled to a bus, the said readable medium of a computer includes but not limited to any types of disks (including floppy disks, hard disks, compact disk, CD-ROMs, and magneto-optical disks), ROM (Read-Only Memory), RAM (Random Access Memory), EPROM (Erasable Programmable Read-Only Memory), EEPROM (Electrically Erasable Programmable Read-Only Memory), flash memory, magnetic card or optical card. That is, a readable medium includes any medium that stores or transmits information in a form by readable a device (e.g., a computer).

Those skilled in the art may understand that computer program instructions may be used to implement each block in these structural diagrams and/or block diagrams and/or flow diagrams and a combination of these structural diagrams and/or block diagrams and/or flow diagrams. Those skilled in the art may understand that these computer program instructions may be provided to a processor of a general purpose computer, a special purpose computer, or other programmable data processing methods to implement, so that the processor of computers or the other programmable data processing methods may execute the scheme specified by a block or multiple blocks of the disclosed structural diagrams and/or block diagrams and/or flow diagrams of the disclosure.

Those skilled in the art may understand that various operations, methods, and steps, measures, and solutions in the processes that have been discussed in the disclosure may be alternated, modified, combined, or removed. Further, other steps, measures, and solutions that include the operations, methods, and processes that have been discussed in this disclosure can also be alternated, modified, rearranged, decomposed, combined, or removed. Further, that various operations, methods, and steps, measures, and solutions in the processes disclosed in this disclosure in the existing art may also be alternated, modified, rearranged, decomposed, combined, or removed.

The above description is only part of the embodiments of the disclosure, it should be noted that for those of ordinary skill in the art, without departing from the principles of the disclosure, improvements and modifications may be made, within the scope of the appended claims.

## Claims

1. A method performed by a user equipment, UE, (116, 900) in a wireless communication system, the method comprising:
receiving, from a base station (102), a first reference signal, RS, corresponding to a first beam;
receiving, from the base station, a plurality of second RSs mapped with the first RS based on configuration information including information on a number of the plurality of the second RSs and information on a time interval between the plurality of second RSs and the first RS, wherein each of beams corresponding to the plurality of second RSs is finer than the first beam; and
identifying at least one RS with a reference signal received power, RSRP, greater than a first threshold among the plurality of the second RSs.

2. The method of claim 1, further comprising:
receiving, from the base station, the configuration information; and
measuring RSRPs for the plurality of second RSs based on the configuration information.

3. The method of claim 1, further comprising:
selecting one or more first RSs based on a number of the one or more first RSs, and a second threshold for the RSRP.

4. The method of claim 1, wherein the configuration information further comprises information on a time-frequency resource position of the plurality of second RSs.

5. The method of claim 1, wherein the configuration information further comprises at least one of information on a frequency domain unit interval of the plurality of second RSs, information on a number of time domain units occupied by the plurality of second RSs, or information on a number of frequency domain units occupied by the plurality of second RSs.

6. The method of claim 1, wherein the plurality of second RSs comprises at least one of a synchronization signal block, SSB, a demodulation reference signal, DMRS, of a physical broadcast channel, PBCH, in the SSB, a DMRS in a control resource set, CORESET, for scheduling system information, a DMRS in a search space, a DMRS in downlink control information, a DMRS received in a physical downlink control channel, PDCCH, or a DMRS received on a physical downlink shared channel, PDSCH, for the system information.

7. The method of claim 1, wherein the configuration information further includes information on repetition transmission for the plurality of second RSs, and
wherein the information on the repetition transmission comprises at least one of information on a number of repetition transmissions, information on a starting position of a time-frequency resource for the repetition transmission, information on a size of the time-frequency resource for the repetition transmission, information on a time interval between the plurality of second RSs, information on a frequency interval between the plurality of second RSs signals, or information on a period of the plurality of second RSs.

8. The method of claim 1, further comprising:
transmitting, to a base station, a feedback for at least one beam corresponding to at least one second RS based on mapping between the plurality of second RSs and random access resources.

9. A user equipment, UE, (116, 900) for
a wireless communication system, the UE comprising:
a transceiver (901); and
a controller (902) coupled with the transceiver and configured to:
receive, from a base station, a first reference signal, RS, corresponding to a first beam,
receive, from the base station, a plurality of second RSs mapped with the first RS based on configuration information including information on a number of the plurality of the second RSs and information on a time interval between the plurality of second RSs and the first RS, wherein each of beams corresponding to the plurality of second RSs is finer than the first beam, and
identify at least one RS with a reference signal received power, RSRP, greater than a first threshold among the plurality of the second RSs.

10. The UE of claim 9, wherein the controller is further configured to:
receive, from the base station, the configuration information, and
measure RSRPs for the plurality of second RSs based on the configuration information.

11. The UE of claim 9, wherein the controller is further configured to:
select one or more first RSs based on a number of the one or more first RSs, and a second threshold for the RSRP.

12. The UE of claim 9, wherein the configuration information further comprises information on a time-frequency resource position of the plurality of second RSs.

13. The UE of claim 9, wherein the configuration information further comprises at least one of information on a frequency domain unit interval of the plurality of second RSs, information on a number of time domain units occupied by the plurality of second RSs, or information on a number of frequency domain units occupied by the plurality of second RSs.

14. The UE of claim 9, wherein the plurality of second RSs comprises at least one of a synchronization signal block, SSB, a demodulation reference signal, DMRS, of a physical broadcast channel, PBCH, in the SSB, a DMRS in a control resource set, CORESET, for scheduling system information, a DMRS in a search space, a DMRS in downlink control information, a DMRS received in a physical downlink control channel, PDCCH, or a DMRS received on a physical downlink shared channel, PDSCH, for the system information.

15. The UE of claim 9, wherein the configuration information further includes information on repetition transmission for the plurality of second RSs, and
wherein the information on the repetition transmission comprises at least one of information on a number of repetition transmissions, information on a starting position of a time-frequency resource for the repetition transmission, information on a size of the time-frequency resource for the repetition transmission, information on a time interval between the plurality of second RSs, information on a frequency interval between the plurality of second RSs signals, or information on a period of the plurality of second RSs.

## Patentansprüche

1. Verfahren, das von einem Benutzergerät, UE, (116, 900) in einem drahtlosen Kommunikationssystem ausgeführt wird, wobei das Verfahren Folgendes umfasst:
Empfangen eines ersten Referenzsignals, RS, das einem ersten Strahl entspricht, von einer Basisstation (102);
Empfangen einer Vielzahl von zweiten RSs, die dem ersten RS zugeordnet sind, basierend auf Konfigurationsinformationen, die Informationen über eine Anzahl der Vielzahl der zweiten RSs und Informationen über ein Zeitintervall zwischen der Vielzahl von zweiten RSs und dem ersten RS enthalten, von der Basisstation,
wobei jeder der Strahlen, die der Vielzahl von zweiten RSs entsprechen, feiner als der erste Strahl ist; und
Identifizieren mindestens eines RS mit einer Referenzsignalempfangsleistung, RSRP, die größer als ein erster Schwellenwert ist, aus der Vielzahl der zweiten RSs.

2. Verfahren nach Anspruch 1, das ferner Folgendes umfasst:
Empfangen der Konfigurationsinformationen von der Basisstation; und
Messen von RSRPs für die Vielzahl von zweiten RSs basierend auf den Konfigurationsinformationen.

3. Verfahren nach Anspruch 1, das ferner Folgendes umfasst:
Auswählen eines oder mehrerer erster RSs basierend auf einer Anzahl des einen oder der mehreren ersten RSs und einem zweiten Schwellenwert für die RSRP.

4. Verfahren nach Anspruch 1, wobei die Konfigurationsinformationen ferner Informationen über eine Zeit-Frequenz-Ressourcenposition der Vielzahl von zweiten RSs umfassen.

5. Verfahren nach Anspruch 1, wobei die Konfigurationsinformationen ferner Informationen über ein Frequenzbereichseinheitsintervall der Vielzahl von zweiten RSs, Informationen über eine Anzahl von Zeitbereichseinheiten, die von der Vielzahl von zweiten RSs belegt werden, und/oder Informationen über eine Anzahl von Frequenzbereichseinheiten umfassen, die von der Vielzahl von zweiten RSs belegt werden.

6. Verfahren nach Anspruch 1, wobei die Vielzahl von zweiten RSs einen Synchronisationssignalblock, SSB, ein Demodulationsreferenzsignal, DMRS, eines physikalischen Broadcast-Kanals, PBCH, in dem SSB, ein DMRS in einem Steuerungsressourcensatz, CORESET, für die Planung von Systeminformationen, ein DMRS in einem Suchraum, ein DMRS in Downlink-Steuerungsinformationen, ein DMRS, das in einem physikalischen Downlink-Steuerungskanal, PDCCH, empfangen wird, und/oder ein DMRS umfassen, das auf einem gemeinsam genutzten physikalischen Downlink-Kanal, PDSCH, für die Systeminformationen empfangen wird.

7. Verfahren nach Anspruch 1, wobei die Konfigurationsinformationen ferner Informationen über die Wiederholungsübertragung für die Vielzahl von zweiten RSs enthalten, und
wobei die Informationen über die Wiederholungsübertragung Informationen über eine Anzahl von Wiederholungsübertragungen, Informationen über eine Startposition einer Zeit-Frequenz-Ressource für die Wiederholungsübertragung, Informationen über eine Größe der Zeit-Frequenz-Ressource für die Wiederholungsübertragung, Informationen über ein Zeitintervall zwischen der Vielzahl von zweiten RSs, Informationen über ein Frequenzintervall zwischen der Vielzahl von zweiten RSs und/oder Informationen über einen Zeitraum der Vielzahl von zweiten RSs umfassen.

8. Verfahren nach Anspruch 1, das ferner Folgendes umfasst:
Übertragen eines Feedbacks für mindestens einen Strahl, der mindestens einem zweiten RS entspricht, basierend auf der Zuordnung zwischen der Vielzahl von zweiten RSs und Direktzugriffsressourcen an eine Basisstation.

9. Benutzergerät, UE, (116, 900) für ein drahtloses Kommunikationssystem, wobei das UE Folgendes umfasst:
einen Transceiver (901); und
eine Steuerungseinheit (902), die mit dem Transceiver gekoppelt und zu Folgendem konfiguriert ist:
Empfangen eines ersten Referenzsignals, RS, das einem ersten Strahl entspricht, von einer Basisstation,
Empfangen einer Vielzahl von zweiten RSs, die dem ersten RS zugeordnet sind, basierend auf Konfigurationsinformationen, die Informationen über eine Anzahl der Vielzahl der zweiten RSs und Informationen über ein Zeitintervall zwischen der Vielzahl von zweiten RSs und dem ersten RS enthalten, von der Basisstation,
wobei jeder der Strahlen, die der Vielzahl von zweiten RSs entsprechen, feiner als der erste Strahl ist, und
Identifizieren mindestens eines RS mit einer Referenzsignalempfangsleistung, RSRP, die größer als ein erster Schwellenwert ist, aus der Vielzahl der zweiten RSs.

10. UE nach Anspruch 9, wobei die Steuerungseinheit ferner zu Folgendem konfiguriert ist:
Empfangen der Konfigurationsinformationen von der Basisstation, und
Messen von RSRPs für die Vielzahl von zweiten RSs basierend auf den Konfigurationsinformationen.

11. UE nach Anspruch 9, wobei die Steuerungseinheit ferner zu Folgendem konfiguriert ist:
Auswählen eines oder mehrerer erster RSs basierend auf einer Anzahl des einen oder der mehreren ersten RSs und einem zweiten Schwellenwert für die RSRP.

12. UE nach Anspruch 9, wobei die Konfigurationsinformationen ferner Informationen über eine Zeit-Frequenz-Ressourcenposition der Vielzahl von zweiten RSs umfassen.

13. UE nach Anspruch 9, wobei die Konfigurationsinformationen ferner Informationen über ein Frequenzbereichseinheitsintervall der Vielzahl von zweiten RSs, Informationen über eine Anzahl von Zeitbereichseinheiten, die von der Vielzahl von zweiten RSs belegt werden, und/oder Informationen über eine Anzahl von Frequenzbereichseinheiten umfassen, die von der Vielzahl von zweiten RSs belegt werden.

14. UE nach Anspruch 9, wobei die Vielzahl von zweiten RSs einen Synchronisationssignalblock, SSB, ein Demodulationsreferenzsignal, DMRS, eines physikalischen Broadcast-Kanals, PBCH, in dem SSB, ein DMRS in einem Steuerungsressourcensatz, CORESET, für die Planung von Systeminformationen, ein DMRS in einem Suchraum, ein DMRS in Downlink-Steuerungsinformationen, ein DMRS, das in einem physikalischen Downlink-Steuerungskanal, PDCCH, empfangen wird, und/oder ein DMRS umfassen, das auf einem gemeinsam genutzten physikalischen Downlink-Kanal, PDSCH, für die Systeminformationen empfangen wird.

15. UE nach Anspruch 9, wobei die Konfigurationsinformationen ferner Informationen über die Wiederholungsübertragung für die Vielzahl von zweiten RSs enthalten, und
wobei die Informationen über die Wiederholungsübertragung Informationen über eine Anzahl von Wiederholungsübertragungen, Informationen über eine Startposition einer Zeit-Frequenz-Ressource für die Wiederholungsübertragung, Informationen über eine Größe der Zeit-Frequenz-Ressource für die Wiederholungsübertragung, Informationen über ein Zeitintervall zwischen der Vielzahl von zweiten RSs, Informationen über ein Frequenzintervall zwischen der Vielzahl von zweiten RSs und/oder Informationen über einen Zeitraum der Vielzahl von zweiten RSs umfassen.

## Revendications

1. Procédé exécuté par un équipement utilisateur (UE) (116, 900) dans un système de communication sans fil, le procédé comprenant :
recevoir, d'une station de base (102), un premier signal de référence (RS) correspondant à un premier faisceau ;
recevoir, de la station de base, une pluralité de deuxièmes RS mappés avec le premier RS en fonction d'informations de configuration incluant des informations sur un nombre de la pluralité de deuxièmes RS et des informations sur un intervalle de temps entre la pluralité de deuxièmes RS et le premier RS,
où chacun des faisceaux correspondant à la pluralité de deuxièmes RS est plus étroit que le premier faisceau ; et
identifier au moins un RS avec une puissance reçue du signal de référence (RSRP) supérieure à un premier seuil parmi la pluralité de deuxièmes RS.

2. Procédé selon la revendication 1, comprenant en outre :
recevoir, de la station de base, les informations de configuration ; et
mesurer des RSRP pour la pluralité de deuxièmes RS en fonction des informations de configuration.

3. Procédé selon la revendication 1, comprenant en outre :
sélectionner un ou plusieurs premiers RS en fonction d'un nombre de l'un ou plusieurs premiers RS, et d'un deuxième seuil pour le RSRP.

4. Procédé selon la revendication 1 où les informations de configuration comprennent en outre des informations sur une position de ressource temps-fréquence de la pluralité de deuxièmes RS.

5. Procédé selon la revendication 1, où les informations de configuration comprennent en outre au moins l'un des éléments suivants : des informations sur un intervalle unitaire de domaine fréquentiel de la pluralité de deuxièmes RS, des informations sur un nombre d'unités de domaine temporel occupées par la pluralité de deuxièmes RS, ou des informations sur un nombre d'unités de domaine fréquentiel occupées par la pluralité de deuxièmes RS.

6. Procédé selon la revendication 1, où la pluralité de deuxièmes RS comprend au moins l'un des éléments suivants : un bloc de signal de synchronisation (SSB), un signal de référence de démodulation (DMRS) d'un canal physique de diffusion (PBCH) dans le SSB, un DMRS dans un ensemble de ressources de contrôle (CORESET) pour planifier des informations système, un DMRS dans un espace de recherche, un DMRS dans des informations de commande de liaison descendante, un DMRS reçu dans un canal physique de commande de liaison descendante (PDCCH), ou un DMRS reçu sur un canal physique partagé de liaison descendante (PDSCH) pour les informations système.

7. Procédé selon la revendication 1, où les informations de configuration incluent en outre des informations sur la transmission par répétition pour la pluralité de deuxièmes RS, et
où les informations sur la transmission par répétition comprennent au moins l'un des éléments suivants : des informations sur un nombre de transmissions par répétition, des informations sur une position de départ d'une ressource temps-fréquence pour la transmission par répétition, des informations sur une taille de la ressource temps-fréquence pour la transmission par répétition, des informations sur un intervalle de temps entre la pluralité de deuxièmes RS, des informations sur un intervalle de fréquence entre la pluralité de deuxièmes signaux RS, ou des informations sur une période de la pluralité de deuxièmes RS.

8. Procédé selon la revendication 1, comprenant en outre :
transmettre, à une station de base, une rétroaction pour au moins un faisceau correspondant à au moins un deuxième RS en fonction d'un mappage entre la pluralité de deuxièmes RS et des ressources d'accès aléatoire.

9. Équipement utilisateur (UE) (116, 900) pour un système de communication sans fil, l'UE comprenant :
un émetteur-récepteur (901) ; et
un contrôleur (902) couplé à l'émetteur-récepteur et configuré pour :
recevoir, d'une station de base, un premier signal de référence (RS) correspondant à un premier faisceau,
recevoir, de la station de base, une pluralité de deuxièmes RS mappés avec le premier RS en fonction d'informations de configuration incluant des informations sur un nombre de la pluralité de deuxièmes RS et des informations sur un intervalle de temps entre la pluralité de deuxièmes RS et le premier RS,
où chacun des faisceaux correspondant à la pluralité de deuxièmes RS est plus étroit que le premier faisceau, et
identifier au moins un RS avec une puissance reçue du signal de référence (RSRP) supérieure à un premier seuil parmi la pluralité de deuxièmes RS.

10. UE selon la revendication 9, où le contrôleur est en outre configuré pour :
recevoir, de la station de base, les informations de configuration, et
mesurer des RSRP pour la pluralité de deuxièmes RS en fonction des informations de configuration.

11. UE selon la revendication 9, où le contrôleur est en outre configuré pour :
sélectionner un ou plusieurs premiers RS en fonction d'un nombre de l'un ou plusieurs premiers RS, et d'un deuxième seuil pour le RSRP.

12. UE selon la revendication 9, où les informations de configuration comprennent en outre des informations sur une position de ressource temps-fréquence de la pluralité de deuxièmes RS.

13. UE selon la revendication 9, où les informations de configuration comprennent en outre au moins l'un des éléments suivants : des informations sur un intervalle unitaire de domaine fréquentiel de la pluralité de deuxièmes RS, des informations sur un nombre d'unités de domaine temporel occupées par la pluralité de deuxièmes RS, ou des informations sur un nombre d'unités de domaine fréquentiel occupées par la pluralité de deuxièmes RS.

14. UE selon la revendication 9, où la pluralité de deuxièmes RS comprend au moins l'un des éléments suivants : un bloc de signal de synchronisation (SSB), un signal de référence de démodulation (DMRS) d'un canal physique de diffusion (PBCH) dans le SSB, un DMRS dans un ensemble de ressources de contrôle (CORESET) pour planifier des informations système, un DMRS dans un espace de recherche, un DMRS dans des informations de commande de liaison descendante, un DMRS reçu dans un canal physique de commande de liaison descendante (PDCCH), ou un DMRS reçu sur un canal physique partagé de liaison descendante (PDSCH) pour les informations système.

15. UE selon la revendication 9, où les informations de configuration incluent en outre des informations sur la transmission par répétition pour la pluralité de deuxièmes RS, et
où les informations sur la transmission par répétition comprennent au moins l'un des éléments suivants : des informations sur un nombre de transmissions par répétition, des informations sur une position de départ d'une ressource temps-fréquence pour la transmission par répétition, des informations sur une taille de la ressource temps-fréquence pour la transmission par répétition, des informations sur un intervalle de temps entre la pluralité de deuxièmes RS, des informations sur un intervalle de fréquence entre la pluralité de deuxièmes signaux RS, ou des informations sur une période de la pluralité de deuxièmes RS.
